# EUROPEAN PATENT SPECIFICATION

(11) **EP 3 816 595 B1**
(45) Date of publication and mention of the grant of the patent: **05.01.2022**
(21) Application number: 20185344.7
(22) Date of filing: 10.07.2020
(51) Int. Cl.: G01K 1/08, G01W 1/00

(54) **RADIATION SHIELDING DEVICE FOR ATMOSPHERIC TEMPERATURE SENSOR**
STRAHLUNGSABSCHIRMUNGSVORRICHTUNG FÜR EINEN SENSOR ZUR MESSUNG DER UMGEBUNGSTEMPERATUR
DISPOSITIF DE PROTECTION CONTRE LES RAYONNEMENTS POUR UN DÉTECTEUR DE LA TEMPÉRATURE D'ENVIRONNEMENT

(30) Priority: 31.10.2019 KR 20190138081
(43) Date of publication of application: 05.05.2021
(73) Proprietor: National Institute of Meteorological Sciences, Seogwipo-si, Jeju-do 63568 (KR)
(72) Inventor: CHOI, Reno Kyu-Young, 63568 Seogwipo-si (KR); KIM, Ki Hoon, 63568 Seogwipo-si (KR); PARK, Sung Hwa, 63558 Seogwipo-si (KR); LEE, Yoon Sang, 63135 Jeju-si (KR); KIM, Seung Bum, 63559 Seogwipo-si (KR)
(74) Representative: V.O.

(56) References cited:
- US-A1- 2019 056 528
- US-B1- 6 247 360
- EVYATAR ERELL ET AL: "Measurement of air temperature in the presence of a large radiant flux: an assessment of assively ventilated thermometer screens", BOUNDARY LAYER METEOROLOGY, vol. 114, no. 1, 1 January 2005 (2005-01-01), pages 205-231, XP055755893, NL ISSN: 0006-8314, DOI: 10.1007/s10546-004-8946-8

## Description

The present disclosure relates to a radiation shielding device for measuring temperature while minimizing influence of external factors.

It was difficult to accurately measure temperature due to external factors such as snow, rain, and geothermal heat from ground affecting temperature measuring instruments. Thus, a lot of efforts have been made to measure the actual temperature by reducing the influence caused by such factors.

A Stevenson screen was proposed to reduce the influence caused by such factors. The Stevenson screen represents a shelter or an enclosure to thermometers against the external factors, while still allowing air to circulate freely around them. The Stevenson screen is required to be constructed of wood, white in color to reflect direct sunlight, in a double-louvered design, placed at a certain distance above from the ground, and placed on grass to protect the thermometers from being influenced by direct or reflected sunlight. And in the northern hemisphere, doors of the Stevenson screen should always face north so as to prevent the direct sunlight on the thermometers. More information on the traditional Stevenson screen can be found in the Wikipedia, i.e., https://en.wikipedia.org/wiki/Stevenson_screen, on the Internet.

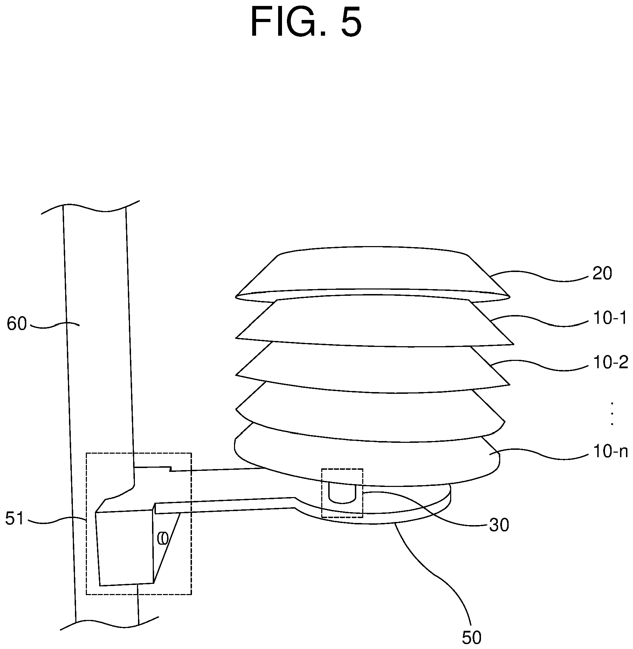

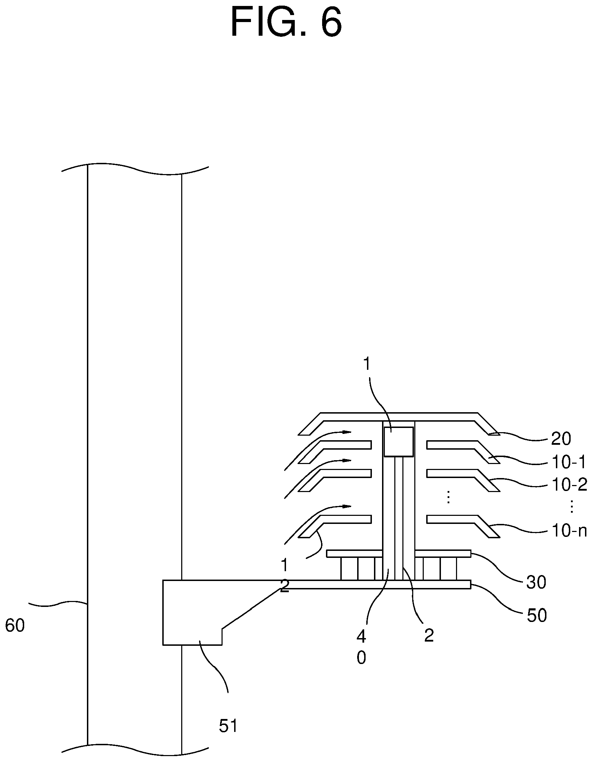

However, with the recent development of technology, miniaturization of the temperature measuring instruments has seen some progress, and as a result, a miniaturized radiation shielding device is used instead of the Stevenson screen. Figs. 5 and 6 show a conventional radiation shielding device as such.

Fig. 5 is a drawing schematically illustrating a conventional radiation shielding device, and Fig. 6 is a drawing schematically illustrating a cross section of a structure of the conventional radiation shielding device of Fig. 5.

By referring to Figs. 5 and 6, according to the conventional radiation shielding device, multiple covering units 10-1, 10-2, ..., and, 10-n, referred to as 10 below, are layered, to thereby form inner space for holding a sensor holder 40 inside the radiation shielding device, where the sensor holder 40 includes a miniaturized atmospheric temperature sensor 1 and its wiring 2. And a shielding unit 20 for protecting an inside of the radiation shielding device may be located at an upper part of the conventional radiation shielding device. Also, the conventional radiation shielding device may include (i) a sensor supporting member 30 to allow the sensor holder 40 to be inserted into the radiation shielding device and to be fixed, and (ii) a shield supporting member 50 for supporting the radiation shielding device as a whole. Herein, the shield supporting member 50 includes a joining part 51 to be used for installing the radiation shielding device on a structure 60. And, the multiple covering units 10 and the shielding unit 20 may be layered with a certain gap being provided between a covering unit and its adjacent covering unit(s) and between the shielding unit 20 and its adjacent covering unit, to allow air inside the radiation shielding device to be circulated. Since extended frames of the multiple covering units 10 and the shielding unit 20 are formed in a direction obliquely toward the ground, the sunlight directed toward the radiation shielding device can be prevented, and simultaneously, the sensor holder in the radiation shieding device can be protected from rain, etc.

However, the configuraitons of the multiple covering units 10 and the shielding unit 20 cannot prevent the influence of geothermal heat (shown as arrows) directed obliquely from a bottom toward the radiation shielding device when the radiation shielding device is installed as shown in Fig. 6, and further, the geothermal heat is easily taken in through the gaps between the adjacent covering units. Therefore, the atmospheric temperature sensor 1 located inside the conventional radiation shielding device is influenced more significantly.

Therefore, a new radiation shielding device with an improved structure is required.

It is an object of the present disclosure to solve all the aforementioned problems.

It is another object of the present disclosure to provide a radiation shielding device having a structure which minimizes influence of, for example, geothermal heat directed from a ground toward the radiation shielding device.

It is still another object of the present disclosure to provide the radiation shielding device having a structure which efficiently drains water affecting the radiation shielding device, such as rain, condensation, etc.

It is still yet another object of the present disclosure to provide the radiation shielding device to be used in various environments for general purpose.

In order to accomplish objects above and characteristic effects to be described later of the present disclosure, distinctive structures of the present disclosure are described as follows.

In accordance with the present disclosure, there is provided a radiation shielding device as claimed in claim 1.

As one example, a second gap maintaining unit with a specific height is disposed around the second extra opening, and wherein the sensor supporting member and the first specific covering unit are combined directly or indirectly to each other with a second gap being provided by the second gap maintaining unit.

As one example, the radiation shielding device is mounted on a device supporting member which is to be fixed to a surrounding structure, wherein a third extra opening, corresponding to the first extra opening and the second extra opening, is formed on the device supporting member, wherein the covering unit, the sensor supporting member, and the device supporting member are combined by engaging the fixing member with the first extra opening, the second extra opening and the third extra opening, and wherein a third opening, corresponding to the specific first opening and the second opening, is formed on the device supporting member to allow the sensor holder to pass therethrough.

As one example, a buffering member capable of absorbing external force from the surrounding structure applied to the radiation shielding device is attached to the device supporting member, and wherein the buffering member allows the radiation shielding device to tightly be engaged with the surrounding structure.

As one example, a fan is further attached to at least one of the first opening, the second opening, and the third opening, to allow the air to be taken in and circulated inside the radiation shielding device.

As one example, the extended frame part is detachable from the main frame part, and wherein the first sub-frame part is detachable from the second sub-frame part, and wherein the direction of the first sub-frame part and that of the second sub-frame part are allowed to be adjusted.

As one example, at least part of the radiation shielding device is in a specific color with a ratio of reflecting light and geothermal heat greater than a threshold.

The above and other objects and features of the present disclosure will become apparent from the following description of preferred embodiments given in conjunction with the accompanying drawings, in which:
Fig. 1 is a drawing schematically illustrating a cross section of an installed radiation shielding device in accordance with one example embodiment of the present disclosure.
Fig. 2 is a drawing schematically illustrating the radiation shielding device seen from its bottom, and a sensor holder where at least one atmospheric temperature sensor is mounted in accordance with one example embodiment of the present disclosure.
Fig. 3A is a drawing schematically illustrating one of covering units which serve as a main body of the radiation shielding device, and a shielding unit to be used for protecting an inside of the radiation shielding device in accordance with one example embodiment of the present disclosure.
Fig. 3B is a drawing schematically illustrating a sensor supporting member which allows the sensor holder to be inserted into the radiation shielding device and to be engaged with the sensor supporting member in accordance with one example embodiment of the present disclosure.
Fig. 3C is a drawing schematically illustrating the sensor holder where the atmospheric temperature sensor is mounted in accordance with one example embodiment of the present disclosure.
Fig. 3D is a drawing schematically illustrating a device supporting member which supports the radiation shielding device and allows the radiation shielding device to be installed onto a surrounding structure in accordance with one example embodiment of the present disclosure.
Fig. 4 is a drawing schematically illustrating a cross section of a configuration of extended frame parts of covering units to be used for reducing influence of external factors such as geothermal heat directed from a ground toward the radiation shielding device and a configuration of drainage openings formed on at least part of the extended frame parts in accordance with one example embodiment of the present disclosure.
Fig. 5 is a drawing schematically illustrating a conventional radiation shield.
Fig. 6 is a drawing schematically illustrating a cross section of a detailed structure of the conventional radiation shielding device of Fig. 5.

In the following detailed description, reference is made to the accompanying drawings that show, by way of illustration, specific embodiments in which the present disclosure may be practiced. These embodiments are described in sufficient detail to enable those skilled in the art to practice the present disclosure. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure.

In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or ideas.

The headings and abstract of the present disclosure provided herein are for convenience only and do not limit or interpret the scope or meaning of the embodiments.

As used in this specification and the appended claims, the singular forms "a," "an," and "the" include plural referents, i.e., one or more, unless the content and context clearly dictates otherwise.

To allow those skilled in the art to the present disclosure to be carried out easily, the example embodiments of the present disclosure by referring to attached diagrams will be explained in detail as shown below.

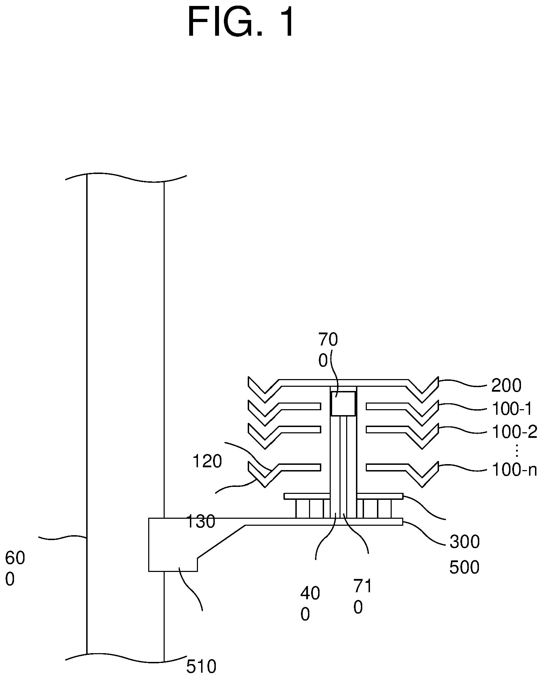

Fig. 1 is a drawing schematically illustrating a cross section of an installed radiation shielding device in accordance with one example embodiment of the present disclosure.

By referring to Fig. 1, each of covering units 100-1, 100-2, ..., and 100-n of the present disclosure, referred to as 100 below, is layered while maintaining a first gap between the adjacent covering units. Herein, the covering units 100 serve as a main body of the radiation shielding device. The detailed description in this specification and the appended claims take an example of one of the covering units 100 for the convenience of description. Herein, the number of the covering units 100 is not limited to a certain value. Further, a first height of the first gap formed between the adjacent covering units is not limited to a certain value. The first gap between the adjacent covering units is created by a first gap maintaining unit disposed around a first extra opening on the covering unit, and in that case, a certain height of the first gap maintaining unit determines the first height of the first gap.

A shielding unit 200 is positioned at an upper part of the covering units 100, and thus a whole of the covering units 100 and the shielding unit 200 serves as the main body of the radiation shielding device. Herein, the shielding unit 200 prevents sunlight, rain, impurities, waste, etc. from entering the radiation shielding device.

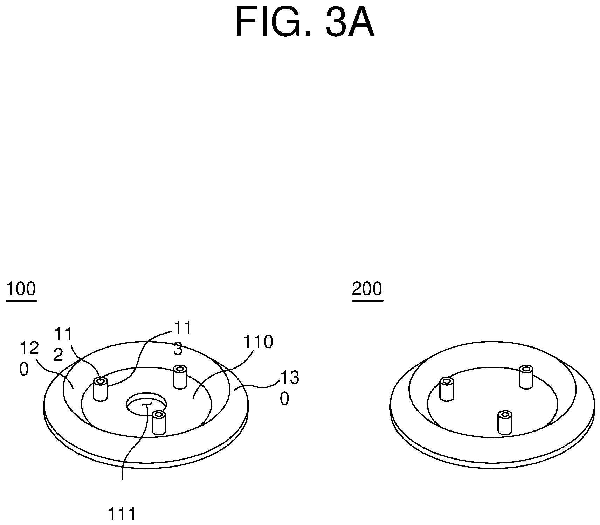

Detailed structures of the covering units 100 and the shielding unit 200 are described by referring to Fig. 3A as follows.

Fig. 3A is a drawing schematically illustrating one of the covering units on a left side, and the shielding unit to be used for protecting an inside of the radiation shielding device on a right side in accordance with one example embodiment of the present disclosure.

By referring to Fig. 3A, the covering unit 100 includes a main frame part 110 through which a first opening 111 is disposed, where the first opening 111 provides space where a sensor holder is allowed to be inserted into and located in the radiation shielding device and where air inside the radiation shielding device is allowed to be circulated.

And the covering unit 100 includes a combining part to be used for combining the covering unit 100 with a sensor supporting member which is directly or indirectly engaged with at least one first specific covering unit among the covering units when the radiation shielding device is installed. Herein, in the covering unit 100 as shown in Fig. 3A, the first extra opening 112 is shown as the combining part to be used for fixing the covering unit 100 and the sensor supporting member by using a fixing member, and also, the first gap maintaining unit 113 having the certain height is shown as formed around the first extra opening 112. In case each of the covering units 100 is layered as such, (i) each first extra opening of each of the covering units 100 is positioned correspondingly with one another, and (ii) the fixing member may pass through the first extra openings of the covering units 100, to thereby engage and fix a whole of the covering units 100, and as a result, the first gap, as high as the certain height of the first gap maintaining unit 113, is provided between the adjacent covering units 100, as described above by referring to Fig. 1.

However, a structure of the combining part is not limited to what is shown in Fig. 3A, and its position, shape, etc. may vary as the case may be. As another example, each of the covering units 100 may be configured as being engaged with another surrounding structure such that each of the covering units 100 is supported by said surrounding structure, in which case, the engaged states of the combining parts may be different from what is shown in Fig. 3A.

Next, the covering unit 100 includes an extended frame part having (i) a first sub-frame part 120 extending from an outer perimeter of the main frame part 110 of the covering unit 100 in a first direction obliquely toward a ground and (ii) a second sub-frame part 130 extending from the first sub-frame part 120 in a second direction obliquely toward sky. Herein, as one example, the extended frame part of the covering unit 100 may be detachable from the main frame part 110, and also, the first sub-frame part 120 and the second sub-frame part 130 may be detachable from each other. Further, the direction of the first sub-frame part 120 and the second sub-frame part 130 may be allowed to be adjusted. Apparently, as another example, the main frame part 110, the first sub-frame part 120, and the second sub-frame part 130 of the covering unit 100 may be configured as one body, and such a structure of the covering unit 100 may vary as the case may be.

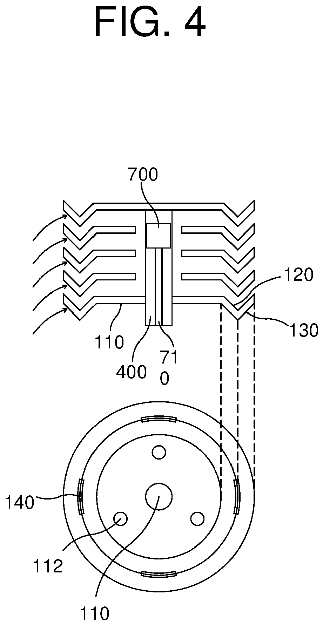

Due to such a structure of the extended frame part of the covering unit 100, influence of geothermal heat reflected from the ground toward the radiation shielding device is reduced, and thus the atmospheric temperature sensor inside the radiation shielding device may measure temperature more accurately. These will be described in more detail by referring to Fig. 4 below.

Next, the shielding unit 200 as shown in Fig. 3A has no first opening 111 as formed on the covering unit 100, although the rest configuration of the shielding unit 200 is same as that of the covering unit 100. And, the shielding unit 200 is located at the upper part of the layered covering units 100, to shield a particular first opening of a second specific covering unit, among the covering units, located adjacent to the shielding unit 200, and may thus prevent sunlight, rain and impurities from entering the radiation shielding device.

The sensor supporting member 300 as such is located at the lower part of the layered covering units 100 as shown in Fig. 1, and allows the sensor holder to pass through a bottom of the radiation shielding device.

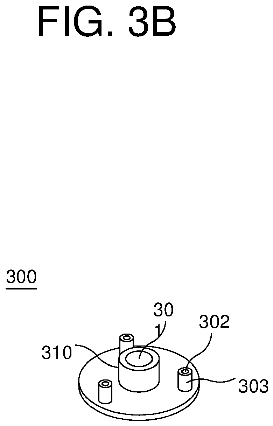

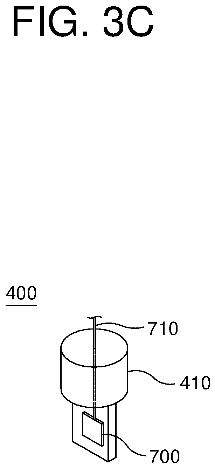

Detailed structures of the sensor supporting member 300 and the sensor holder are described by referring to Figs. 3B and 3C as follows.

Fig. 3B is a drawing schematically illustrating the sensor supporting member 300 which allows the sensor holder to pass through the radiation shielding device and to be engaged with the sensor supporting member 300 in accordance with one example embodiment of the present disclosure.

By referring to Fig. 3B, a second opening 301 is formed in a certain location on the sensor supporting member 300 to allow the sensor holder 400 to pass through the second opening 301. Herein, the certain location of the second opening 301 corresponds to a specific first opening, among the first openings, of the first specific covering unit. Also, a first coupling part 310 is further formed on the sensor supporting member 300 such that the first coupling part 310 is combined with a second coupling part formed on at least part of the sensor holder 400.

Also, in case that the fixing member is used for allowing the covering unit 100 and the sensor supporting member 300 to be combined with each other, then (i) the first extra opening 112 is formed on the covering unit 100, (ii) a second extra opening 302, corresponding to the first extra opening 112 of the covering unit 100, is formed on the sensor supporting member 300, and (iii) the covering unit 100 and the sensor supporting member 300 is combined by engaging the fixing member with the first extra opening 112 and the second extra opening 302.

Also, a second gap maintaining unit 303 with a specific height may further be disposed around the second extra opening 302 of the sensor supporting member 300. Herein, the specific height of the second gap maintaining unit 303 may be a second gap between the sensor supporting member 300 and the first specific covering unit. Herein, the sensor supporting member 300 may be placed at the lower part of the layered covering units 100, and thus the device supporting member to be described below may be located as being contact with the second gap maintaining unit 303. And in this case, the second gap corresponding to the specific height of the second gap maintaining unit 303 may be provided between the sensor supporting member 300 and the device supporting member.

Fig. 3C is a drawing schematically illustrating the sensor holder where the atmospheric temperature sensor is mounted to allow the atmospheric temperature sensor to be located inside the radiation shielding device in accordance with one example embodiment of the present disclosure.

By referring to Fig. 3C, the sensor holder 400 holds the atmospheric temperature sensor 700 and has a length appropriate to allow the atmospheric temperature sensor 700 to be located inside the radiation shielding device. And the sensor holder 400 may include (i) a part (not shown) where a wiring 710 connected to the atmospheric temperature sensor 700 is arranged and (ii) the second coupling part 410 having a shape corresponding to the first coupling part 310 of the sensor supporting member 300. Accordingly, the second coupling part 410 is allowed to be engaged with the first coupling part 310.

By referring to Fig. 1 again, the radiation shielding device may further include the device supporting member 500 which allows the radiation shielding device to be installed onto a surrounding structure 600. Herein, at least part 511 of a joining part 510 of the device supporting member 500 may have a shape suitable for the surrounding structure 600. And the joining part 510 of the device supporting member 500 and the surrounding structure 600 may be combined by using the fixing member such as bolts, screws, etc. Also, in Fig. 1, the device supporting member 500 is shown as located at the lower part of the layered covering units 100 and the sensor supporting member 300, but the scope of the present disclosure is not limited thereto. That is, as another example, the device supporting member 500 may be located at the middle part of the layered covering units 100 to allow the covering units 100 to be layered above and below the device supporting member 500, or the device supporting member 500 may be located at the upper part of the layered covering units 100 to allow the covering units 100 to be layered below the device supporting member 500, as the case may be.

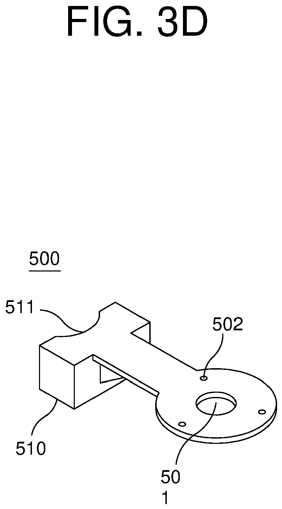

A detailed structure of the device supporting member 500 is described by referring to Fig. 3D.

By referring to Fig. 3D, the device supporting member 500 may include the joining part 510 to be engaged with the surrounding structure 600, and may be in a shape allowing said at least part 511 of the joining part 510 to be tightly engaged with the surrounding structure 600. Also, at least one buffering member (not shown) may be attached to said at least part 511 of the joining part 510 to absorb external force from the surrounding structure 600 applied to the radiation shielding device and allow the device supporting member 500 and the surrounding structure 600 to be engaged with each other more tightly.

Also, a third opening 501 may be formed in a certain location on the device supporting member 500. Herein, the certain location of the third opening 501 may correspond to (i) the specific first opening among the first openings and (ii) the second opening 301, in order to allow the sensor holder 400 to pass through (1) the second opening 301 of the sensor supporting member 300 and (2) the specific first opening of the first specific covering unit engaged directly or indirectly with the sensor supporting member 300.

And, in case that the fixing member 800 is used for allowing the covering unit 100, the sensor supporting member 300 and the device supporting member 500 to be combined with one another, then (i) the first extra opening 112 may be formed on the covering unit 100, (ii) the second extra opening 302, corresponding to the first extra opening 112 of the covering unit 100, may be formed on the sensor supporting member 300, and (iii) a third extra opening 502, corresponding to the first extra opening 112 and the second extra opening 302, may be formed on the device supporting member 500. Herein, the covering unit 100, the sensor supporting member 300, and the device supporting member 500 may be fixed by the fixing member passing through the first extra opening 112, the second extra opening 302, and the third extra opening 502.

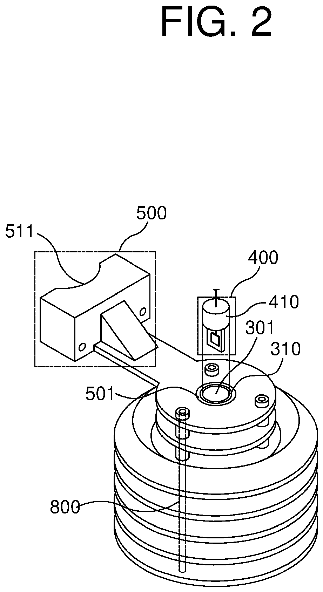

Fig. 2 is a drawing schematically illustrating the radiation shielding device seen from its bottom in accordance with one example embodiment of the present disclosure.

By referring to Fig. 2, the radiation shielding device in accordance with the present disclosure may be characterized in that (i) the first extra opening of the covering unit 100, (ii) the second extra opening of the sensor supporting member 300, and (iii) the third extra opening of the device supporting member 500 may be formed on locations corresponding to one another, where the covering unit 100, the sensor supporting member 300, and the device supporting member 500 may be fixed by the fixing member 800 passing through the first to the third extra openings. Herein, the sensor holder 400 may be inserted into the radiation shielding device through (i) the second opening 301 of the sensor supporting member 300 and (ii) the first opening 111 of the covering unit 100 positioned as corresponding to the third opening 501 of the device supporting member 500. Further, the second coupling part 410 of the sensor holder 400 may be engaged with the first coupling part 310 of the sensor supporting member 300, to thereby fix the atmospheric temperature sensor on a particular location inside the radiation shielding device, where the second coupling part 410 is in a shape suitable for the first coupling part 310 formed just around the second opening 301.

Fig. 4 is a drawing schematically illustrating a cross section of a structure of the radiation shielding device to be used for reducing the influence of external factors such as the geothermal heat directed from the ground toward the radiation shielding device and a structure of one or more drainage openings formed on the extended frame part of the covering units of the radiation shielding device in accordance with one example embodiment of the present disclosure.

By referring to Fig. 4, the extended frame part may include (i) the first sub-frame part 120 extending from the outer perimeter of the main frame part 110 of the covering unit 100 as shown in Fig. 3A in the first direction obliquely or vertically toward the ground, and (ii) the second sub-frame part 130 extending from the first sub-frame part 120 in the second direction obliquely or vertically toward the sky. Thus, by layering the plurality of the covering units 100 structured as such, the geothermal heat (shown as arrows) reflected from the ground toward the radiation shielding device as shown in Fig. 4 cannot enter the radiation shielding device, that is, the influence of the geothermal heat on atmosphere inside the radiation shielding device is reduced. And as a result, the atmospheric temperature sensor 700 inside the radiation shielding device may measure the temperature more accurately.

Also, the drainage opening 140 is formed on at least part of a boundary line where the first sub-frame part 120 and the second sub-frame part 130 meet, and water such as rain, condensation, etc. may be drained. Herein, a shape, the number, a horizontal position angle, etc. of the drainage opening are not limited to what is shown in Fig. 4, and may vary as the case may be. Also, the drainage opening may further serve as an exit-point for impurities, etc. in addition to water.

As another example, a fan may be further attached to at least one of (i) the first opening 111 of the covering unit 100, (ii) the second opening 301 of the sensor supporting member 300, and (iii) the third opening 501 of the device supporting member 500, in order to take in and circulate the air inside the radiation shielding device in accordance with the present disclosure. By using the fan to smoothly circulate the air entering and leaving the radiation shielding device where the atmospheric temperature sensor is located, the atmosphere inside the radiation shielding device may reflect the actual temperature more accurately.

Also, as another example, at least part of the radiation shielding device may be in a specific color with a ratio of reflecting light and the geothermal heat greater than a threshold. For this purpose, each of components of the radiation shielding device may be in the specific color with the ratio greater than the threshold, for example, may be white in color, in order to reduce the influence of the light and the geothermal heat on the inside of the radiation shielding device. Herein, each of the components of the radiation shielding device may be manufactured from a specific material in the specific color, or specific substance in the specific color may be applied to the components.

The radiation shielding device in accordance with the present disclosure has an effect of measuring the temperature while minimizing the influence of the geothermal heat, etc. directed from the ground toward the radiation shielding device.

The radiation shielding device in accordance with the present disclosure has another effect of efficiently draining water such as rain, condensation, etc. which affects the radiation shielding device.

The radiation shielding device in accordance with the present disclosure has still another effect of allowing usage in various environments for general purpose.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the scope as defined in the following claims.

## Claims

1. A radiation shielding device in which at least one atmospheric temperature sensor (700) is to be installed, comprising:
covering units serving as a main body of the radiation shielding device wherein the covering units (100; 100-1, 100-2,...,100-n) are layered in an order from a first covering unit (100-n) to a last covering unit (100-1), the covering units comprising (i) a main frame part (110) through which a first opening (111) is disposed, a (ii) combining part and (iii) an extended frame part;
a shielding unit without the first opening, and wherein the shielding unit is located at an upper part of the covering units, to shield the first opening of the last covering unit (100-1) being located adjacent to the shielding unit, so as to prevent sunlight, rain and impurities from entering the radiation shielding device;
wherein the radiation shielding device is configured to be installed with the shielding unit towards the sky;
a sensor supporting member (300) which is directly or indirectly engaged with the first covering unit (100-n); and
a sensor holder (400) on which the atmospheric temperature sensor (700) is to be mounted, such that the atmospheric temperature sensor is positioned inside the radiation shielding device by combining the sensor holder (400) and the sensor supporting member (300);
wherein the first opening (111) in the main frame part (110) of the covering units provides space where the sensor holder (400) is allowed to be inserted into and located in the radiation shielding device and where air inside the radiation shielding device is allowed to be circulated,
wherein the combining part is to be used for combining its corresponding covering unit (100) with the sensor supporting member (300), the combining part comprising a first extra opening (112) through the main frame part, a first gap maintaining unit (113) being formed around the first extra opening (112), the first gap maintaining unit (113) providing for a first gap between adjacent covering units, and
the extended frame part having
(iii-1) a first sub-frame part (120) extending from an outer perimeter of the main frame part (110) in a first direction obliquely toward a direction towards the ground and away from the main frame part (110), and
(iii-2) a second sub-frame part (130) extending from the first sub-frame part (120) in a second direction obliquely toward the sky and away from the first sub-frame part, and wherein at least one drainage opening is formed on at least part of a boundary line where the first sub-frame part and the second sub-frame part meet, and
wherein a second opening (301) is formed in a certain location on the sensor supporting member (300) to allow the sensor holder (400) to pass through the second opening (301), and wherein the certain location corresponds to a specific first opening (111), among the first openings, of the first covering unit (100), and
wherein a first coupling part (310) is formed on the sensor supporting member (300) such that the first coupling part (310) is combined with a second coupling part (410) formed on at least part of the sensor holder (400), and
wherein a second extra opening (302), which corresponds to the first extra opening (112) of the covering unit, is formed on the sensor supporting member (300), and
wherein the covering unit and the sensor supporting member are combined by engaging a fixing member (800) with the first extra opening and the second extra opening.

2. The radiation shielding device of Claim 1, wherein a second gap maintaining unit (303) with a specific height is disposed around the second extra opening (302), and wherein the sensor supporting member (300) and the first covering unit (100) are combined directly or indirectly to each other with a second gap being provided by the second gap maintaining unit (303).

3. The radiation shielding device of Claim 1, wherein the radiation shielding device is mounted on a device supporting member (500) which is to be fixed to a surrounding structure (600),
wherein a third extra opening (502), corresponding to the first extra opening (112) and the second extra opening (302), is formed on the device supporting member (500), wherein the covering unit (100), the sensor supporting member (300), and the device supporting member are combined by engaging the fixing member (800) with the first extra opening, the second extra opening and the third extra opening, and wherein a third opening (501), corresponding to the specific first opening (111) and the second opening (301), is formed on the device supporting member (500) to allow the sensor holder (400) to pass therethrough.

4. The radiation shielding device of Claim 3, wherein a buffering member capable of absorbing external force from the surrounding structure (600) applied to the radiation shielding device is attached to the device supporting member (500), and wherein the buffering member allows the radiation shielding device to tightly be engaged with the surrounding structure.

5. The radiation shielding device of Claim 1, wherein a fan is further attached to at least one of the first opening (111), the second opening (301), and the third opening (501), to allow the air to be taken in and circulated inside the radiation shielding device.

6. The radiation shielding device of Claim 1, wherein the extended frame part is detachable from the main frame part (110), and
wherein the first sub-frame part (120) is detachable from the second sub-frame part (130), and wherein the direction of the first sub-frame part (120) and that of the second sub-frame part (130) are allowed to be adjusted.

## Patentansprüche

1. Strahlungsabschirmungsvorrichtung, in der wenigstens ein atmosphärischer Temperatursensor (700) installiert werden soll, umfassend:
Abdeckungseinheiten, die als ein Hauptkörper der Strahlungsabschirmungsvorrichtung dienen, wobei die Abdeckungseinheiten (100; 100-1, 100-2, ..., 100-n) in einer Reihenfolge von einer ersten Abdeckungseinheit (100-n) zu einer letzten Abdeckungseinheit (100-1) geschichtet sind, wobei die Abdeckungseinheiten (i) einen Hauptrahmenteil (110), durch den eine erste Öffnung (111) angeordnet ist, einen (ii) kombinierenden Teil und (iii) einen erweiterten Rahmenteil umfassen;
eine Abschirmungseinheit ohne die erste Öffnung, und wobei sich die Abschirmungseinheit an einem oberen Teil der Abdeckungseinheiten befindet, um die erste Öffnung der letzten Abdeckungseinheit (100-1) abzuschirmen, die sich benachbart zu der Abschirmungseinheit befindet, um zu verhindern, dass Sonnenlicht, Regen und Verunreinigungen in die Strahlungsabschirmungsvorrichtung eindringen;
wobei die Strahlungsabschirmungsvorrichtung so angeordnet ist, dass sie mit der Abschirmungseinheit zum Himmel hin installiert wird;
ein Sensorträgerelement (300), das direkt oder indirekt mit der ersten Abdeckungseinheit (100-n) in Eingriff steht; und
einen Sensorhalter (400), an dem der atmosphärische Temperatursensor (700) montiert werden soll, sodass der atmosphärische Temperatursensor innerhalb der Strahlungsabschirmungsvorrichtung durch Kombinieren des Sensorhalters (400) und des Sensorträgerelements (300) positioniert wird;
wobei die erste Öffnung (111) in dem Hauptrahmenteil (110) der Abdeckungseinheiten einen Raum bereitstellt, in dem der Sensorhalter (400) in die Strahlungsabschirmungsvorrichtung eingeführt werden und sich darin befinden kann, und in dem Luft innerhalb der Strahlungsabschirmungsvorrichtung zirkulieren kann,
wobei das Kombinationsteil zum Kombinieren seiner entsprechenden Abdeckungseinheit (100) mit dem Sensorträgerelement (300) verwendet werden soll, wobei das Kombinationsteil eine erste zusätzliche Öffnung (112) durch das Hauptrahmenteil umfasst, wobei eine erste Spalthalteeinheit (113) um die erste zusätzliche Öffnung (112) ausgebildet ist, wobei die erste Spalthalteeinheit (113) einen ersten Spalt zwischen benachbarten Abdeckungseinheiten bereitstellt, und
wobei das erweiterte Rahmenteil aufweist
(iii-1) ein erstes Hilfsrahmenteil (120), das sich von einem äußeren Umfang des Hauptrahmenteils (110) in einer ersten Richtung schräg zu einer Richtung zum Boden und weg von dem Hauptrahmenteil (110) erstreckt, und
(iii-2) ein zweites Hilfsrahmenteil (130), das sich von dem ersten Hilfsrahmenteil (120) in einer zweiten Richtung schräg zum Himmel und weg von dem ersten Hilfsrahmenteil erstreckt, und wobei wenigstens eine Entwässerungsöffnung auf wenigstens einem Teil einer Grenzlinie ausgebildet ist, wo das erste Hilfsrahmenteil und das zweite Hilfsrahmenteil zusammentreffen, und
wobei eine zweite Öffnung (301) an einer bestimmten Stelle auf dem Sensorträgerelement (300) ausgebildet ist, sodass der Sensorhalter (400) durch die zweite Öffnung (301) hindurchgehen kann, und wobei die bestimmte Stelle einer spezifischen ersten Öffnung (111) unter den ersten Öffnungen der ersten Abdeckungseinheit (100) entspricht, und
wobei ein erstes Kopplungsteil (310) an dem Sensorträgerelement (300) ausgebildet ist, sodass das erste Kopplungsteil (310) mit einem zweiten Kopplungsteil (410) kombiniert ist, das an wenigstens einem Teil des Sensorhalters (400) ausgebildet ist, und
wobei eine zweite zusätzliche Öffnung (302), die der ersten zusätzlichen Öffnung (112) der Abdeckungseinheit entspricht, an dem Sensorträgerelement (300) ausgebildet ist, und
wobei die Abdeckungseinheit und das Sensorträgerelement durch Ineinandergreifen eines Befestigungselements (800) mit der ersten zusätzlichen Öffnung und der zweiten zusätzlichen Öffnung kombiniert werden.

2. Strahlungsabschirmungsvorrichtung nach Anspruch 1, wobei eine zweite Spalthalteeinheit (303) mit einer bestimmten Höhe um die zweite zusätzliche Öffnung (302) angeordnet ist, und wobei das Sensorträgerelement (300) und die erste Abdeckungseinheit (100) direkt oder indirekt miteinander verbunden sind, wobei ein zweiter Spalt durch die zweite Spalthalteeinheit (303) bereitgestellt wird.

3. Strahlungsabschirmungsvorrichtung nach Anspruch 1, wobei die Strahlungsabschirmungsvorrichtung an einem Vorrichtungsträgerelement (500) montiert ist, das an einer umgebenden Struktur (600) befestigt werden soll,
wobei eine dritte zusätzliche Öffnung (502), die der ersten zusätzlichen Öffnung (112) und der zweiten zusätzlichen Öffnung (302) entspricht, an dem Vorrichtungsträgerelement (500) ausgebildet ist, wobei die Abdeckungseinheit (100), das Sensorträgerelement (300) und das Vorrichtungsträgerelement durch Ineinandergreifen des Befestigungselements (800) mit der ersten zusätzlichen Öffnung, der zweiten zusätzlichen Öffnung und der dritten zusätzlichen Öffnung kombiniert werden, und wobei eine dritte Öffnung (501), die der spezifischen ersten Öffnung (111) und der zweiten Öffnung (301) entspricht, an dem Vorrichtungsträgerelement (500) ausgebildet ist, sodass der Sensorhalter (400) dadurch hindurchgehen kann.

4. Strahlungsabschirmungsvorrichtung nach Anspruch 3, wobei ein Pufferelement, das in der Lage ist, eine auf die Strahlungsabschirmungsvorrichtung einwirkende äußere Kraft von der umgebenden Struktur (600) zu absorbieren, an dem Vorrichtungsträgerelement (500) angebracht ist, und wobei das Pufferelement ermöglicht, dass die Strahlungsabschirmungsvorrichtung fest mit der umgebenden Struktur in Eingriff steht.

5. Strahlungsabschirmungsvorrichtung nach Anspruch 1, wobei ferner ein Gebläse an wenigstens der ersten Öffnung (111) und/oder der zweiten Öffnung (301) und/oder der dritten Öffnung (501) angebracht ist, sodass die Luft angesaugt und innerhalb der Strahlungsabschirmungsvorrichtung zirkulieren kann.

6. Strahlungsabschirmungsvorrichtung nach Anspruch 1, wobei das erweiterte Rahmenteil vom Hauptrahmenteil (110) abnehmbar ist, und wobei das erste Hilfsrahmenteil (120) von dem zweiten Hilfsrahmenteil (130) abnehmbar ist, und wobei die Richtung des ersten Hilfsrahmenteils (120) und die des zweiten Hilfsrahmenteils (130) eingestellt werden können.

## Revendications

1. Dispositif de blindage contre les rayonnements dans lequel au moins un capteur de température atmosphérique (700) doit être installé, comprenant :
des unités de recouvrement servant de corps principal du dispositif de protection contre les rayonnements, les unités de recouvrement (100 ; 100-1, 100-2,..., 100-n) étant stratifiées dans un ordre allant d'une première unité de recouvrement (100-n) à une dernière unité de recouvrement (100-1), les unités de recouvrement comprenant (i) une partie de cadre principale (110) à travers laquelle une première ouverture (111) est disposée, une (ii) partie de combinaison et (iii) une partie de cadre étendue ;
une unité de protection sans la première ouverture, et dans lequel l'unité de protection est située au niveau d'une partie supérieure des unités de recouvrement, pour protéger la première ouverture de la dernière unité de recouvrement (100-1) étant située adjacente à l'unité de protection, de manière à empêcher la lumière du soleil, la pluie et les impuretés de pénétrer dans le dispositif de protection contre les rayonnements ;
dans lequel le dispositif de protection contre le rayonnement est configuré pour être installé avec l'unité de protection vers le ciel ;
un élément de support de capteur (300) qui est en prise directe ou indirecte avec la première unité de recouvrement (100-n) ; et
un support de capteur (400) sur lequel le capteur de température atmosphérique (700) doit être monté, de sorte que le capteur de température atmosphérique est positionné à l'intérieur du dispositif de protection contre les rayonnements en combinant le support de capteur (400) et l'élément de support de capteur (300) ;
dans lequel la première ouverture (111) dans la partie de cadre principale (110) des unités de recouvrement fournit un espace où le support de capteur (400) peut être inséré et situé dans le dispositif de protection contre les rayonnements et où de l'air à l'intérieur du dispositif de protection contre les rayonnements peut être mis en circulation,
dans lequel la partie de combinaison doit être utilisée pour combiner son unité de recouvrement correspondante (100) avec l'élément de support de capteur (300), la partie de combinaison comprenant une première ouverture supplémentaire (112) à travers la partie de cadre principale, une première unité de maintien d'espace (113) étant formée autour de la première ouverture supplémentaire (112), la première unité de maintien d'espace (113) fournissant un premier espace entre des unités de recouvrement adjacentes, et
la partie de cadre étendue ayant
(iii-1) une première partie de sous-cadre (120) s'étendant depuis un périmètre extérieur de la partie de cadre principale (110) dans une première direction en oblique vers une direction vers le sol et en s'éloignant de la partie de cadre principale (110), et
(iii-2) une seconde partie de sous-cadre (130) s'étendant à partir de la première partie de sous-cadre (120) dans une seconde direction obliquement vers le ciel et loin de la première partie de sous-cadre, et dans lequel au moins une ouverture de drainage est formée sur au moins une partie d'une ligne de limite où la première partie de sous-cadre et la seconde partie de sous-cadre se rencontrent, et
dans lequel une deuxième ouverture (301) est formée à un certain emplacement sur l'élément de support de capteur (300) pour permettre au support de capteur (400) de passer à travers la deuxième ouverture (301), et dans lequel l'emplacement certain correspond à une première ouverture spécifique (111), parmi les premières ouvertures, de la première unité de recouvrement (100), et
dans lequel une première partie de couplage (310) est formée sur l'élément de support de capteur (300) de telle sorte que la première partie de couplage (310) soit combinée à une seconde partie de couplage (410) formée sur au moins une partie du support de capteur (400), et
dans lequel une deuxième ouverture supplémentaire (302), qui correspond à la première ouverture supplémentaire (112) de l'unité de recouvrement, est formée sur l'élément de support de capteur (300), et
dans lequel l'unité de recouvrement et l'élément de support de capteur sont combinés en mettant en prise un élément de fixation (800) avec la première ouverture supplémentaire et la deuxième ouverture supplémentaire.

2. Dispositif de protection contre les rayonnements selon la revendication 1, dans lequel une seconde unité de maintien d'espace (303) avec une hauteur spécifique est disposée autour de la deuxième ouverture supplémentaire (302), et dans lequel l'élément de support de capteur (300) et la première unité de recouvrement (100) sont combinés directement ou indirectement l'un à l'autre avec un second espace étant fourni par la seconde unité de maintien d'espace (303).

3. Dispositif de protection contre les rayonnements selon la revendication 1, dans lequel le dispositif de protection contre les rayonnements est monté sur un élément de support de dispositif (500) qui doit être fixé à une structure environnante (600),
dans lequel une troisième ouverture supplémentaire (502), correspondant à la première ouverture supplémentaire (112) et à la deuxième ouverture supplémentaire (302), est formée sur l'élément de support de dispositif (500), dans lequel l'unité de recouvrement (100), l'élément de support de capteur (300) et l'élément de support de dispositif sont combinés en mettant en prise l'élément de fixation (800) avec la première ouverture supplémentaire, la deuxième ouverture supplémentaire et la troisième ouverture supplémentaire, et dans lequel une troisième ouverture (501), correspondant à la première ouverture spécifique (111) et à la deuxième ouverture (301), est formée sur l'élément de support de dispositif (500) pour permettre au support de capteur (400) de passer à travers celle-ci.

4. Dispositif de protection contre les rayonnements selon la revendication 3, dans lequel un élément d'amortissement capable d'absorber une force externe provenant de la structure environnante (600) appliquée au dispositif de protection contre les rayonnements est fixé à l'élément de support de dispositif (500), et dans lequel l'élément d'amortissement permet au dispositif de protection contre les rayonnements d'être mis en prise étroitement avec la structure environnante.

5. Dispositif de protection contre les rayonnements selon la revendication 1, dans lequel un ventilateur est en outre fixé à au moins une parmi la première ouverture (111), la deuxième ouverture (301) et la troisième ouverture (501), pour permettre à l'air d'être aspiré et mis en circulation à l'intérieur du dispositif de protection contre les rayonnements.

6. Dispositif de protection contre les rayonnements selon la revendication 1, dans lequel la partie de cadre étendue peut être détachée de la partie de cadre principale (110), et
dans lequel la première partie de sous-cadre (120) peut être détachée de la seconde partie de sous-cadre (130), et dans lequel la direction de la première partie de sous-cadre (120) et celle de la seconde partie de sous-cadre (130) peuvent être ajustées.
